(19) **Europäisches Patentamt European Patent Office Office européen des brevets**

(11) **EP 3 630 690 B1**

(12) **FASCICULE DE BREVET EUROPEEN**

(45) Date de publication et mention de la délivrance du brevet:
**12.07.2023 Bulletin 2023/28**

(21) Numéro de dépôt: **18730026.4**

(22) Date de dépôt: **30.05.2018**

(51) Classification Internationale des Brevets (IPC):
**C03C 1/00** *(2006.01)*  **C03C 17/00** *(2006.01)*

(52) Classification Coopérative des Brevets (CPC):
**C03C 17/007; C03C 1/008;** C03C 2214/04;
C03C 2217/452; C03C 2217/465; C03C 2217/475;
C03C 2217/485; C03C 2217/72; C03C 2218/113

(86) Numéro de dépôt international:
**PCT/FR2018/051244**

(87) Numéro de publication internationale:
**WO 2018/220325 (06.12.2018 Gazette 2018/49)**

(54) **SUBSTRAT EN VERRE TEINTE RESISTANT MECANIQUEMENT ET REVETU D'UNE PEINTURE MINERALE POUR TOIT AUTOMOBILE**

MECHANISCH RESISTENTES SUBSTRAT IN GEFÄRBTEM GLAS MIT MINERALLACKSCHICHT FÜR EIN AUTOMOBILDACH

MECHANICALLY RESISTANT SUBSTRATE IN TINTED GLASS, COVERED WITH MINERAL PAINT FOR AN AUTOMOBILE ROOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **31.05.2017 FR 1754814**

(43) Date de publication de la demande:
**08.04.2020 Bulletin 2020/15**

(73) Titulaire: **SAINT-GOBAIN GLASS FRANCE**
**92400 Courbevoie (FR)**

(72) Inventeurs:
• **COMPOINT, Francois**
**37000 Tours (FR)**
• **GARNIER, Louis**
**75012 Paris (FR)**

(74) Mandataire: **Saint-Gobain Recherche**
**B.P. 135**
**39, quai Lucien Lefranc**
**93303 Aubervilliers Cedex (FR)**

(56) Documents cités:
WO-A1-2014/016518   WO-A1-2017/203123
WO-A2-02/06405   US-A- 3 895 136
US-A- 3 977 888   US-A- 4 478 905
US-A- 4 515 867   US-A- 5 891 238
US-A1- 2002 034 650   US-B1- 6 176 919

**Description**

La présente invention porte sur un substrat en verre teinté revêtu partiellement d'une peinture minérale, permettant de conférer au substrat une résistance mécanique améliorée. Le substrat est utilisé en tant que vitrage pour toit automobile.

Les vitrages utilisés pour les toits automobiles sont le plus souvent des vitrages trempés ayant subi un traitement thermique à température élevée, c'est-à-dire à des températures supérieures à 650°C et généralement autour de 700°C. Les bordures des vitrages utilisés dans l'automobile sont habituellement recouvertes d'une bande de peinture noire qui permet notamment de cacher les éléments situés sur les bords, comme par exemple les joints ou les câbles. Ces peintures sont principalement de type émail, c'est-à-dire constituées d'un mélange de fritte de verre, de résine organique, de solvants, et de pigments noirs. Les peintures émaillées sont nécessairement trempées, donc subissent un traitement thermique à des températures élevées, ce qui permet de les faire adhérer sur le vitrage. Elles sont par conséquent déposées sur le vitrage avant l'étape de mise en forme et de trempe. Cependant, les émaux ont tendance à fragiliser mécaniquement le verre et ainsi la résistance mécanique d'un verre revêtu d'une couche d'émail, testée au test de chute à la bille, est nettement inférieure à celle d'un verre nu, sans couche d'émail. Cette fragilisation s'explique notamment par la différence de coefficient d'expansion thermique pouvant exister entre les composants de la couche d'émail (fritte, pigments ou charges) et le verre, ce qui génère des contraintes lors du traitement thermique à température élevée. La fragilisation peut également s'expliquer par la présence de bulles dans la couche d'émail, qui constituent des points de départ potentiels pour des fissures susceptibles de se propager au sein de la couche. La très bonne adhésion des couches en émail sur le verre entraînent une propagation des fissures dans le verre et une rupture prématurée de ce dernier lors d'une contrainte mécanique, même faible.

Des peintures organiques qui pourraient moins fragiliser le verre ne répondent toutefois pas aux spécifications recherchées dans le cas précis des vitrages trempés puisqu'elles ne sont pas trempables, ne résistant pas aux températures auxquelles est effectuée la trempe. Il n'est donc pas possible de les appliquer sur le vitrage avant les étapes de mise en forme et de trempe.

Des peintures minérales, notamment à base de silicates, sont connues pour être des peintures trempables utilisables pour des vitrages automobiles et applicables avant l'étape de trempe. On citera par exemple le brevet US 6,176,919 qui décrit une peinture aqueuse comprenant un silicate de sodium dans laquelle une quantité importante de silice amorphe est ajoutée pour améliorer la résistance mécanique. La solution proposée dans ce brevet n'est tout à fois pas satisfaisante puisque l'ajout de silice dans le réseau silicate a tendance à accélérer la polymérisation des espèces silicates et à provoquer un figeage de la pâte lors de l'application par sérigraphie sur le verre.

On cherche donc une peinture qui soit à la fois facilement applicable par exemple par sérigraphie mais aussi par tout autre procédé par voie liquide (pulvérisation, rideau...) sur le substrat en verre, et qui n'entraîne pas de fragilisation de ce dernier. Les inventeurs ont découvert de façon surprenante que la présence de certaines charges minérales dans la composition d'une peinture à base de silicates permettait de limiter la fragilisation du verre revêtu de la peinture.

La présente invention porte sur un toit pour véhicule automobile selon la revendication 1.

Le rapport pondéral entre le silicate d'alcalin et la totalité des charges minérales incluant le pigment est compris entre 0,05 et 2. De façon préférée, le rapport pondéral entre le silicate d'alcalin et la totalité des charges minérales incluant le pigment est compris entre 0,1 et 1. Une quantité supérieure de charges minérales par rapport à la quantité de silicate d'alcalin permet d'améliorer la résistance mécanique. Encore plus préférentiellement, le rapport pondéral entre le silicate d'alcalin et la totalité des charges minérales incluant le pigment minéral noir est compris entre 0,1 et 0,3. En effet, les inventeurs ont noté qu'une quantité trop importante de silicate dans la composition de peinture minérale a tendance à dégrader la peinture, en provoquant l'apparition de bulles notamment après un traitement thermique tel que la trempe. Une peinture comprenant plus de charges minérales que de silicate d'alcalin est moins sensible à la fragilisation pendant les traitements thermiques.

La charge minérale lamellaire est du talc, du mica, ou des argiles à base de silicate ou d'aluminosilicate tels que la kaolinite, l'illinite, la montmorillonite ou la sépiolite.

Très préférentiellement, la charge minérale de la peinture comprend, notamment est, un mélange de talc et d'alumine. Avantageusement, la quantité d'alumine dans le mélange talc/alumine est plus importante que la quantité de talc.

Le mélange de charges minérales possédant une structure en feuillet (charges lamellaires) avec d'autres charges de structure plutôt sphériques dont les coefficients d'expansion thermique sont relativement proches de celui du verre permet de donner à la peinture une très bonne résistance mécanique et également une bonne adhérence.

La quantité de charge minérale représente de préférence entre 20 % et 50 % en poids de la composition de peinture minérale aqueuse.

Le pigment minéral noir peut être par exemple un pigment à base de métaux tels que le fer, le chrome, le cuivre, le cobalt et/ou le manganèse, sous forme d'oxydes ou de sulfures. Les pigments préférés sont de préférence exempts de chrome en raison des problèmes liés à la toxicité et au recyclage de ce métal. Avantageusement, la quantité de pigment minéral noir représente entre 1 et 25 % en poids de la composition de peinture minérale aqueuse. Une quantité trop faible de pigment minéral noir dans la composition de peinture ne permet pas d'obtenir l'aspect gris noir recherché. La granulométrie des charges minérales se présentant sous forme pulvérulente est préférentiellement comprise entre 1 et 10 $\mu$m, cette taille de particules favorisant notamment l'opacité de la peinture. La valeur de granulométrie correspond au $D_{90}$, donc 90% des particules ont une taille comprise entre 1 et 10 $\mu$m.

La composition de peinture minérale aqueuse comprend entre 10 et 55% en poids, notamment entre 15 et 45% en poids, et encore plus préférentiellement entre 15 et 25% en poids de silicate de sodium, de silicate de potassium et/ou de silicate de lithium.

La composition de peinture minérale aqueuse comprend avantageusement en outre un agent dispersant, un agent anti-mousse, un agent épaississant, un agent stabilisant et/ou un agent durcisseur, dans des quantités représentant entre 0,01 et 5% en poids de la composition de peinture minérale aqueuse.

Le substrat selon la présente invention est de préférence obtenu par séchage de la composition de peinture aqueuse à une température inférieure à 250°C.

La couche de peinture minérale mesurée après séchage a de préférence une épaisseur d'au moins 1 $\mu$m, de préférence d'au moins 5 $\mu$m. Avantageusement, l'épaisseur de la peinture mesurée après séchage est inférieure à 50 $\mu$m.

La présence de certaines charges minérales de couleur claire dans la composition de peinture minérale génère un aspect plus gris que noir. Par conséquent, le substrat en verre sur lequel la peinture minérale est appliquée est un verre teinté. La transmission lumineuse $TL_A$ (illuminant D65) du substrat en verre teinté est notamment inférieure à 30%, et de préférence inférieure à 20% pour une épaisseur de 4 mm. La transmission lumineuse est nécessairement mesurée sur une partie du vitrage ne comprenant pas le revêtement de peinture minérale (non revêtu).

Les coordonnées chromatiques, L\*a\*b\*, sont calculées en prenant en compte l'illuminant D65 et l'observateur de référence CIE-1931. Il s'agit de coordonnées colorimétriques obtenues en réflexion du côté de la face opposée à celle sur laquelle est déposée la peinture minérale. La composante L\* définit la clarté, et prend des valeurs entre 0 pour le noir et 100 pour le blanc. Les composantes a\* et b\* peuvent éventuellement être mesurées. Elles représentent les gammes de couleur, qui préférentiellement sont neutres et par conséquent tendent vers 0. Une peinture est perçue comme noire si la valeur de la clarté L\* est inférieure à 15, voire inférieure à 10. A titre de comparaison les émaux utilisés pour les bordures des vitrages automobiles et qui sont très noirs ont une valeur de L\* de l'ordre de 5. La couche de peinture recouvrant partiellement le substrat selon la présente invention a typiquement une valeur de clarté de l'ordre de 29 lorsqu'elle est déposée sur un substrat en verre clair et mesurée après séchage et trempe. Par verre « clair », on entend un verre dont le facteur de transmission lumineuse TL sous illuminant D65 est supérieur ou égale à 90% lorsqu'il est mesuré sur une feuille de verre d'une épaisseur de 4 mm. Le substrat selon la présente invention est un verre teinté dont la transmission lumineuse TLA est faible. La clarté L\* de la peinture mesurée au travers du verre teinté après séchage et trempe est avantageusement inférieure à 5.

Ainsi, la peinture selon la présente invention permet, en raison de la présence de certaines charges minérales, préférentiellement dans des quantités bien définies, de renforcer la résistance mécanique, tout en maintenant les exigences souhaitées en matière de coloration, notamment puisqu'elle est déposée sur un substrat en verre teinté.

La densité optique ou absorbance de la peinture, c'est-à-dire la capacité à absorber la lumière qui la traverse, répond à la spécification donnée pour les applications recherchées, puisqu'elle est supérieure à 2 pour une couche d'environ 20 $\mu$m d'épaisseur déposée sur un verre clair. Cette densité est tout à fait comparable à celle des émaux. Cette valeur d'absorbance mesurée sur verre clair non teinté permet d'atteindre la spécification recherchée qui est d'au moins 3 sur un verre teinté. La mesure de densité est réalisée par transparence, puisqu'on mesure la quantité de lumière transmise par l'émail par rapport à la transparence. La densité optique DO est définie par la formule suivante :

$$DO = \log\frac{1}{transparence}$$

Ainsi, un substrat en verre revêtu d'une couche d'émail qui laisse passer 50% de la lumière possède une transparence de 0,5 et la densité otique mesurée vaut 0,3. Une densité optique de 3 correspond à un substrat très opaque puisqu'il ne laisse passer que 0,1% de lumière.

La rugosité Ra de la couche de peinture, définie dans la norme ISO 4288 comme étant la rugosité moyenne arithmétique du profil et mesurée à l'aide d'un profilomètre ou rugosimètre (par exemple de type Dektak XT commercialisé par la société Brucker) est également conforme aux exigences souhaitées pour cette application puisqu'elle est de préférence inférieure à 1 $\mu$m.

La peinture présente également l'adhésion suffisante, de quadrillage selon la norme ISO 2409 :2007 puisqu'elle est de préférence inférieure ou égale à 2, voire inférieure ou égale à 1.

La présente invention porte également sur un procédé de fabrication d'un toit pour véhicule automobile selon la revendication 11.

La composition de peinture minérale aqueuse est de préférence appliquée sur au moins une bordure du substrat en verre teinté dont la transmission lumineuse sous illuminant D65 est inférieure à 30%, de préférence à 20% pour un substrat d'une épaisseur de 4 mm, la mesure de transmission étant effectuée sur une partie du substrat non revêtue de ladite peinture.

L'étape d'application de la composition de peinture est notamment réalisée par pulvérisation, par rouleau, par enduction laminaire, par impression digitale ou par sérigraphie. De façon préférée, l'étape d'application est réalisée par sérigraphie, et peut donc être intégrée aux lignes de production existant actuellement sur les chaînes de production de vitrages automobiles dans lesquelles les émaux sont également déposés par des techniques de sérigraphie.

Préférentiellement, l'étape de séchage de la peinture est effectuée à une température inférieure à 210°C. Cette température relativement basse permet une élimination de l'eau présente dans la composition de peinture minérale. Le procédé selon l'invention est par conséquent très avantageux par rapport aux procédés actuels existants dans lesquels des peintures de type émail sont déposées sur les substrats en verre et doivent être chauffées à des températures nettement plus élevées (de l'ordre de 700°C) pour que la fritte de verre fonde et que la peinture puisse adhérer suffisamment sur le substrat en verre.

Une fois séchée, la peinture minérale adhère suffisamment sur le substrat en verre teinté pour que celui-ci puisse subir un traitement thermique à haute température (trempe), selon les procédés standards usuellement utilisés dans le domaine de l'automobile.

La présente invention porte également sur des toits pour véhicule automobile susceptible d'être obtenus après trempe thermique d'un substrat en verre tels que décrits ci-avant ou fabriqués selon le procédé décrit ci-dessus.

Les exemples ci-après illustrent l'invention sans en limiter la portée.

Exemple 1 :

La peinture minérale est préparée en mélangeant dans un mixeur sous agitation mécanique vigoureuse les quantités suivantes:

- 63,1 g d'eau avec 0,2 g d'épaississant (Betolin V30) et avec 0,6 g d'agent mouillant (Tego® 740 Evonik)
- Ajout de 0,1g d'antimousse (Foamex 825) et de 20g de pigment noir Fe-Mn (Black 444 Shepherd)
- Ajout de 14 g de talc (Jetfine 1A) avec 62g d'alumine (CTC20 Almatis)
- Ajout de 40g de la solution de silicate de potassium (K42T Woellner) qui est une solution composée de 40% en poids de silicate et de 60% en poids d'eau.

Le mélange est effectué de façon à obtenir une peinture pâteuse, la plus homogène possible, sans grumeaux.

Le rapport pondéral entre le silicate de potassium et la totalité des charges minérales comprenant l'alumine, le talc et le pigment noir est de 0,17.

La peinture est ensuite passée au broyeur tri-cylindre afin d'affiner la microstructure des éléments de la formulation (notamment les poudres minérales) et d'achever son homogénéisation.

La peinture est déposée sur un substrat de verre teinté de 4 mm d'épaisseur présentant une TLA inférieure à 18% à l'aide d'un tire-film puis est séchée à l'étuve à 200°C pendant 20 minutes puis cuite dans une enceinte à 760°C pendant 180 secondes, avant d'être refroidie à 20°C. L'épaisseur de la peinture après séchage est de 30 $\mu$m et la valeur de clarté L* mesurée après séchage et trempe est inférieure à 5.

Des mesures de rupture en flexion ont été réalisées sur l'échantillon ainsi obtenu, à l'aide d'un anneau sur tripode afin d'évaluer sa fragilisation.

Le test de flexion par anneau sur tripode est réalisé à l'aide d'une machine Instron 4400R, pouvant descendre une pièce métallique (anneau) sur une éprouvette. La machine est instrumentée avec un capteur de force de 10 kN. L'anneau est en acier trempé de 10 mm de diamètre et est fixé avec un tore de 1 mm de rayon en bout de la machine Instron. La machine Instron comprend aussi un socle sur lequel sont collées 3 billes métalliques de rayon 5 mm, disposées à 120° sur un cercle de 20 mm de rayon et dont le centre est confondu avec le centre de l'anneau.

L'éprouvette est un verre de 70x70 mm$^2$ et de 3,85 mm d'épaisseur, revêtu ou non sur une de ses faces de la peinture à analyser. L'éprouvette repose sur les 3 billes du socle et est alignée avec le centre de l'anneau, à 1 mm près. Un film adhésif est appliqué sur la face non revêtue de l'éprouvette afin de maintenir les morceaux de l'éprouvette lorsqu'elle sera cassée et de vérifier que la rupture se situe bien au centre de l'échantillon. Une fois l'éprouvette en place, l'anneau vient au contact de la surface de l'éprouvette et on applique alors sur l'anneau une force croissante jusqu'à la rupture de l'éprouvette. Seules les éprouvettes dont l'origine de rupture est sous l'anneau sont comptabilisées. La contrainte de rupture en fonction de la force à rupture et de l'épaisseur de l'éprouvette est donnée par la formule suivante :

$$\sigma_{(MPa)} = K \cdot Force(DaN) \ \textbf{avec} \ K = 9.4091 \times \frac{1}{epaisseur(mm)^2} + 0.018$$

Les résultats montrent que la probabilité de rupture de l'échantillon testé atteint 50% pour une contrainte de 150 MPa. A titre de comparaison, la probabilité de rupture d'un substrat en verre équivalent revêtu d'une couche d'émail de 15 $\mu$m d'épaisseur est de 100 MPa.

Exemple 2 :

Une peinture est préparée comme dans l'exemple 1 en remplaçant la solution de silicate de potassium par une solution de silicate de sodium comprenant 45% en poids de silicate et 55% en poids d'eau (ratio pondéral 50/50 d'un mélange Betol 39T et Betol 50T Woellner).
Le rapport pondéral entre le silicate de potassium et la totalité des charges minérales comprenant l'alumine, le talc et le pigment noir est de 0,19. L'épaisseur de la couche déposée et le traitement thermique de séchage et de cuisson est identique à celui décrit dans l'exemple 1.
La probabilité de rupture de l'échantillon testé atteint 50% pour une contrainte de 160 MPa.

Exemple 3 :

La même peinture que celle décrite dans l'exemple 1 est déposée de façon à former après séchage et cuisson une couche de 5 $\mu$m d'épaisseur.
La probabilité de rupture de l'échantillon testé atteint 50% pour une contrainte de 180 MPa. A titre de comparaison, la probabilité de rupture d'un substrat en verre équivalent revêtu d'une couche d'émail de 5 $\mu$m d'épaisseur est de 90 MPa, et est de 170 MPa pour un substrat nu sans aucune couche.

Exemple 4 :

La même peinture que celle décrite dans l'exemple 2 est déposée de façon à former après séchage et cuisson une couche de 5 $\mu$m d'épaisseur.
La probabilité de rupture de l'échantillon testé atteint 50% pour une contrainte de 195 MPa.

Exemple 5 (non conforme à l'invention):

Une peinture est préparée comme dans l'exemple 1 en remplaçant l'alumine par de l'oxyde de cuivre II (Sigma-Aldrich) dans des quantités équivalentes.
L'épaisseur de la couche déposée et le traitement thermique de séchage et de cuisson est identique à celui décrit dans l'exemple 1.
La probabilité de rupture de l'échantillon testé atteint 50% pour une contrainte de 90 MPa.

Exemple 6 (non conforme à l'invention):

Une peinture est préparée comme dans les exemples 1 et 5, en modifiant les quantités de talc et d'oxyde de cuivre : 6 g de talc (Jetfine 1A) sont mélangés avec 68 g d'oxyde de cuivre II. Le rapport pondéral entre le silicate et la totalité des charges minérales reste inchangé.
L'épaisseur de la couche déposée et le traitement thermique de séchage et de cuisson est identique à celui décrit dans l'exemple 1.
La probabilité de rupture de l'échantillon testé atteint 50% pour une contrainte de 75 MPa.

**Revendications**

1. Toit pour véhicule automobile obtenu après trempe thermique d'un substrat en verre teinté trempable dont au moins une des faces est partiellement revêtue d'une couche de peinture minérale obtenue à partir d'une composition de peinture aqueuse à base d'une solution de silicate d'alcalin comprenant le mélange d'une charge minérale lamellaire avec au moins une autre charge choisie parmi l'alumine, le bore ou le germanium, et au moins un pigment minéral noir, dans lequel le rapport pondéral entre le silicate d'alcalin et la totalité des charges minérales incluant le pigment est compris entre 0,05 et 2, la composition de peinture minérale aqueuse comprend entre 10 et 55% en poids de silicate de sodium, de silicate de potassium et/ou de silicate de lithium, et la charge minérale lamellaire est du talc, du mica, ou des argiles à base de silicate ou d'aluminosilicate.

2. Toit selon la revendication 1, tel que le rapport pondéral entre le silicate d'alcalin et la totalité des charges minérales incluant le pigment est compris entre 0,1 et 1.

3. Toit selon l'une des revendications 1 ou 2, tel que le rapport pondéral entre le silicate d'alcalin et les charges minérales incluant le pigment est compris entre 0,1 et 0,3.

4. Toit selon l'une des revendications précédentes, tel que la charge minérale lamellaire est choisie parmi la kaolinite, l'illinite, la montmorillonite ou la sépiolite.

5. Toit selon l'une des revendications précédentes, tel que la composition de peinture minérale aqueuse comprend entre 15 et 45% en poids, et encore plus préférentiellement entre 15 et 25% en poids de silicate de sodium, de silicate de potassium et/ou de silicate de lithium.

6. Toit selon l'une des revendications précédentes, tel que la composition de peinture minérale comprend en outre un agent dispersant, un agent anti-mousse, un agent épaississant, un agent stabilisant et/ou un agent durcisseur, dans des quantités comprises entre 0,01 et 5% en poids de la composition de peinture minérale aqueuse.

7. Toit selon l'une des revendications précédentes, tel que le substrat est obtenu par séchage de la composition de peinture aqueuse à une température inférieure à 250°C.

8. Toit selon l'une des revendications précédentes, tel que la couche de peinture minérale mesurée après séchage a une épaisseur d'au moins 1 μm, de préférence d'au moins 5 μm.

9. Toit selon l'une des revendications précédentes, tel que la transmission lumineuse TLA du substrat est inférieure à 30%, de préférence inférieure à 20%, la TLA étant mesurée sur une partie du substrat d'une épaisseur de 4 mm non revêtu de peinture minérale.

10. Toit selon l'une des revendications précédentes, tel que la composante de clarté L* mesurée en réflexion sur une partie du vitrage revêtue de la couche de peinture minérale est inférieure à 5.

11. Procédé de fabrication d'un toit pour véhicule automobile selon l'une des revendications précédentes, **caractérisé en ce qu'**il comprend au moins les étapes suivantes :

a. application sur un substrat en verre teinté trempable d'au moins une couche d'une composition de peinture à base d'une solution de silicate d'alcalin dans de l'eau comprenant le mélange d'une charge minérale lamellaire avec au moins une autre charge choisie parmi l'alumine, le bore ou le germanium, et au moins un pigment minéral noir, le rapport pondéral entre le silicate d'alcalin et la totalité des charges minérales incluant le pigment étant compris entre 0,05 et 2, la composition de peinture minérale aqueuse comprenant entre 10 et 55% en poids de silicate de sodium, de silicate de potassium et/ou de silicate de lithium, et la charge minérale lamellaire étant du talc, du mica, ou des argiles à base de silicate ou d'aluminosilicate,
b. séchage de ladite couche à une température inférieure ou égale à 250°C
c. trempe thermique dudit substrat.

12. Procédé selon la revendication 11, dans lequel la composition de peinture est appliquée sur au moins une bordure du substrat en verre teinté dont la transmission lumineuse sous illuminant D65 est inférieure à 30%, de préférence à 20% pour un substrat d'une épaisseur de 4 mm, la mesure de transmission étant effectuée sur une partie du substrat non revêtue de ladite peinture.

13. Procédé selon l'une des revendications 11 ou 12, dans lequel l'étape d'application de la composition de peinture est réalisée par pulvérisation, par rouleau, par enduction laminaire, par impression digitale ou par sérigraphie.

14. Procédé selon l'une des revendications 11 à 13, dans lequel l'étape de séchage est réalisée à une température inférieure à 210°C.

**Patentansprüche**

1. Dach für ein Kraftfahrzeug, das nach einer Wärmehärtung eines härtbaren Buntglassubstrats erhalten wird, dessen mindestens eine Fläche teilweise mit einer Schicht aus Mineralfarbe überzogen ist, die von einer wässrigen Farbzusammensetzung auf Basis einer Alkalisilikatlösung erhalten wird, umfassend die Mischung aus einem lamellierten Mineralfüllstoff mit mindestens einem anderen Füllstoff, der aus Aluminiumoxid, Bor oder Germanium ausgewählt ist, und mindestens ein Steinkohlenstaubpigment, wobei die gewichtsanalytische Beziehung zwischen dem Alkalisilikat und der Gesamtheit der Mineralfüllstoffe, einschließlich des Pigments, zwischen 0,05 und 2 beträgt, die wässrige Mineralfarbzusammensetzung zu zwischen 10 und 55 Gew.-% Natriumsilikat, Kaliumsilikat und/oder Lithiumsilikat umfasst und der lamellierte Mineralfüllstoff aus Talcum, Mika oder Letten auf Basis von Silikat oder Aluminosilikat besteht.

2. Dach nach Anspruch 1, wobei die gewichtsanalytische Beziehung zwischen dem Alkalisilikat und der Gesamtheit der Mineralfüllstoffe, einschließlich des Pigments, zwischen 0,1 und 1 beträgt.

3. Dach nach einem der Ansprüche 1 oder 2, wobei die gewichtsanalytische Beziehung zwischen dem Alkalisilikat und den Mineralfüllstoffen, einschließlich des Pigments, zwischen 0,1 und 0,3 beträgt.

4. Dach nach einem der vorstehenden Ansprüche, wobei der lamellierte Mineralfüllstoff aus Kaolinit, Illinit, Montomorillonit oder Sepiolith ausgewählt ist.

5. Dach nach einem der vorstehenden Ansprüche, wobei die wässrige Mineralfarbzusammensetzung zu zwischen 15 und 45 Gew.-% und noch mehr bevorzugt zu zwischen 15 und 25 Gew.-% Natriumsilikat, Kaliumsilikat und/oder Lithiumsilikat umfasst.

6. Dach nach einem der vorstehenden Ansprüche, wobei die Mineralfarbzusammensetzung ferner ein Dispergiermittel, ein Schaumverhütungsmittel, ein Verdickungsmittel, ein Stabilisierungsmittel und/oder ein Härtungsmittel in Mengen zwischen 0,01 und 5 Gew.-% der wässrigen Mineralfarbzusammensetzung umfasst.

7. Dach nach einem der vorstehenden Ansprüche, wobei das Substrat durch Trocknung der wässrigen Farbzusammensetzung bei einer Temperatur niedriger als 250 °C erhalten wird.

8. Dach nach einem der vorstehenden Ansprüche, wobei die Schicht der Mineralfarbe, die nach der Trocknung gemessen wird, eine Dicke von mindestens 1 $\mu$m, vorzugsweise von mindestens 5 $\mu$m, aufweist.

9. Dach nach einem der vorstehenden Ansprüche, wobei die Lichtdurchlässigkeit TLA des Substrats niedriger als 30 %, vorzugsweise niedriger als 20 % ist, wobei die TLA auf einem Teil des Substrats mit einer Dicke von 4 mm gemessen wird, der nicht von der Mineralfarbe überzogen ist.

10. Dach nach einem der vorstehenden Ansprüche, wobei die Klarheitskomponente L*, die bei Reflektion auf einem Teil der Verglasung gemessen wird, der von der Mineralfarbe überzogen ist, niedriger als 5 ist.

11. Verfahren zum Herstellen eines Dachs für ein Kraftfahrzeug nach einem der vorstehenden Ansprüche, **dadurch gekennzeichnet, dass** es die folgenden Schritte umfasst:

    a. Aufbringen auf ein Substrat aus härtbarem Buntglas mindestens einer Schicht einer Farbzusammensetzung auf Basis einer Alkalisilikatlösung in Wasser, umfassend die Mischung aus einem lamellierten Mineralfüllstoff mit mindestens einem anderen Füllstoff, der aus Aluminiumoxid, Bor oder Germanium ausgewählt ist, und mindestens ein Steinkohlenstaubpigment, wobei die gewichtsanalytische Beziehung zwischen dem Alkalisilikat und der Gesamtheit der Mineralfüllstoffe, einschließlich des Pigments, zwischen 0,05 und 2 beträgt, die wässrige Mineralfarbzusammensetzung umfassend zu zwischen 10 und 55 Gew.-% Natriumsilikat, Kaliumsilikat und/oder Lithiumsilikat, und der lamellierte Mineralfüllstoff aus Talcum, Mika oder Letten auf Basis von Silikat oder Aluminosilikat besteht,
    b. Trocknen der Schicht bei einer Temperatur niedriger als oder gleich 250 °C
    c. Wärmehärten des Substrats.

12. Verfahren nach Anspruch 11, wobei die Farbzusammensetzung auf mindestens einen Rand des Substrats aus Buntglas aufgebracht wird, dessen Lichtdurchlässigkeit unter Lichtart D65 niedriger als 30 %, vorzugsweise als 20 % für ein Substrat mit einer Dicke von 4 mm ist, wobei die Messung der Durchlässigkeit auf einem Teil des Substrats ausgeführt wird, der nicht von der Farbe überzogen ist.

13. Verfahren nach einem der Ansprüche 11 oder 12, wobei der Schritt des Aufbringens der Zusammensetzung der Farbe durch Pulverisieren, durch Rollen, durch laminares Beschichten, durch digitales Drucken oder durch Siebdrucken durchgeführt wird.

14. Verfahren nach einem der Ansprüche 11 bis 13, wobei der Schritt des Trocknens bei einer Temperatur niedriger als 210 °C durchgeführt wird.

## Claims

1. A motor vehicle roof obtained after thermal tempering of a temperable tinted glass substrate, at least one of the faces of which is partially coated with a layer of mineral paint obtained from an aqueous paint composition based on an alkali metal silicate solution comprising the mixing of a platy mineral filler with at least one other filler chosen from alumina, boron or germanium, and at least one black mineral pigment, wherein the weight ratio between the alkali metal silicate and all of the mineral fillers including the pigment is between 0.05 and 2, the aqueous mineral paint composition comprises between 10% and 55% by weight of sodium silicate, potassium silicate and/or lithium silicate, and the platy mineral filler is talc, mica, or clays based on silicate or on aluminosilicate.

2. The roof as claimed in claim 1, such that the weight ratio between the alkali metal silicate and all of the mineral fillers including the pigment is between 0.1 and 1.

3. The roof as claimed in either of claims 1 and 2, such that the weight ratio between the alkali metal silicate and the mineral fillers including the pigment is between 0.1 and 0.3.

4. The roof as claimed in one of the preceding claims, such that the platy mineral filler is chosen from kaolinite, illite, montmorillonite or sepiolite.

5. The roof as claimed in one of the preceding claims, such that the aqueous mineral paint composition comprises between 15% and 45% by weight, and more preferentially still between 15% and 25% by weight of sodium silicate, potassium silicate and/or lithium silicate.

6. The roof as claimed in one of the preceding claims, such that the mineral paint composition further comprises a dispersant, an anti-foaming agent, a thickener, a stabilizer and/or a curing agent, in amounts of between 0.01% and 5% by weight of the aqueous mineral paint composition.

7. The roof as claimed in one of the preceding claims, such that the substrate is obtained by drying the aqueous paint composition at a temperature below 250°C.

8. The roof as claimed in one of the preceding claims, such that the mineral paint layer, measured after drying, has a thickness of at least 1 $\mu$m, preferably of at least 5 $\mu$m.

9. The roof as claimed in one of the preceding claims, such that the light transmission TLA of the substrate is less than 30%, preferably less than 20%, the TLA being measured on a portion of the substrate having a thickness of 4 mm that is not coated with mineral paint.

10. The roof as claimed in one of the preceding claims, such that the lightness component L* measured in reflection on a portion of the glazing coated with the mineral paint layer is less than 5.

11. A process for manufacturing a motor vehicle roof according to any one of the preceding claims, **characterized in that** it comprises at least the following steps:

a. applying, to a temperable tinted glass substrate, at least one layer of a paint composition based on a solution of alkali metal silicate in water comprising the mixing of a platy mineral filler with at least one other filler chosen from alumina, boron or germanium, and at least one black mineral pigment, the weight ratio between the alkali metal silicate and all of the mineral fillers including the pigment being between 0.05 and 2, the aqueous mineral paint composition comprising between 10% and 55% by weight of sodium silicate, potassium silicate and/or lithium silicate, and the platy mineral filler being talc, mica, or clays based on silicate or on aluminosilicate,

b. drying said layer at a temperature below or equal 250°C

c. thermally tempering said substrate.

12. The process as claimed in claim 11, wherein the paint composition is applied to at least one edge of the tinted glass substrate, the light transmission of which under D65 illuminant is less than 30%, preferably less than 20% for a substrate having a thickness of 4 mm, the transmission being measured on a portion of the substrate not coated with said paint.

13. The process as claimed in either of claims 11 and 12, wherein the step of applying the paint composition is carried out by spray coating, roll coating, laminar flow coating, by digital printing or by screen printing.

14. The process as claimed in one of claims 11 to 13, wherein the drying step is carried out at a temperature below 210°C.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6176919 B